# EUROPEAN PATENT APPLICATION

(11) **EP 3 028 933 A1**
(43) Date of publication of application: **08.06.2016**
(21) Application number: 14196559.0
(22) Date of filing: 05.12.2014
(51) Int. Cl.: B62K 25/08, F16F 9/512, F16F 9/516, F16F 15/02, F16F 15/023, F16F 9/06

(54) **Spring unit**

(71) Applicant: ÖHLINS RACING AB, 194 27 Upplands Väsby (SE)
(72) Inventor: Gustafsson Vallander, Leif, 370 30 Rödeby (SE); Sintorn, Torkel, 185 91 Vaxholm (SE); Jarl, Johan, 192 74 Sollentuna (SE)
(74) Representative: Awapatent AB

(57) **Abstract**

The present invention relates to a spring unit (1) for a shock absorber (100) intended for a vehicle. The shock absorber comprises a damping cylinder (101), wherein the damping cylinder (101) is adapted to be telescopically arranged within the spring unit (1). The spring unit (1) comprises a hollow body (2) comprising at least one compression chamber (2b) and at least one additional chamber (3) arranged to be in fluid communication with the compression chamber (2b) such that at least a first flow of fluid (F1) is adapted to be allowed between the compression chamber (2b) and the additional chamber (3) when a threshold value is met. The invention further relates to a shock absorber (100) comprising such a spring unit (1), and a front fork comprising such a shock absorber (100).

## Description

### Technical field

The present specification generally relates to the field of spring units for vehicle shock absorbers and in particularly discloses a spring unit comprising a compression chamber and an additional chamber in fluid communication with said compression chamber.

### Technical background

Suspension systems for vehicles such as cars, all terrain vehicles, motorcycles or bicycles, commonly comprise shock absorbing structures and a suspension structure.

The suspension of vehicles is normally accomplished using a spring, such as for example an external coil spring or in some cases gas, or air, springs.

Shock absorbers on the other hand are used for damping the relative movement between the wheel and the chassis of a vehicle and a conventional, simple shock absorber normally comprises a working cylinder filled with a damping fluid, such as hydraulic oil, and a piston arranged in the cylinder. The damper is then arranged to move telescopically between the vehicle chassis and the wheel. The movement of the wheel and vehicle is damped by the piston moving in the cylinder against the resistance of the fluid, which further causes damping fluid to move in the damping cylinder.

A somewhat more complex type of shock absorber commonly used for vehicles may further comprise integrated suspension means for the vehicle. This is advantageous in that both suspension and damping functionality is achieved using one single unit, or component.

A common type of integrated suspension, or spring, is a gas spring shock absorber. Such a gas, or air spring, commonly comprises a positive and a negative gas spring chambers, separated by a sealing structure and variable in volume. Gas springs are however known to be associated with the major problem of progression of pressure in comparison with a linear movement of the pressurizing components.

In order to somewhat compensate for this progressive increase of pressure it is known in the art to use additional spaces, or chambers, separated from the gas spring chambers by movable structures such as pistons in order to allow for some decrease of the pressure build up in the gas spring chambers by allowing for an increase of the spring chamber volume.

For example, US6135434A discloses an example of a gas spring shock absorber for a bicycle, wherein a third chamber is delimited from the gas spring chamber(s) by a piston, movably arranged in the cylinder in order to allow for a decrease of pressure build up in the gas spring chamber.

US2006091345 discloses another example of a similar gas spring shock absorber design, wherein a third chamber is delimited by a movable piston in order to allow for variability of the volume of a working chamber of the shock absorber.

However, the concept of a third chamber delimited by a moveable piston is associated with well known problems related to the stored energy which is left to the rebound stroke, and the therewith associated so called "kick-back". This kick-back will inevitably result during the compression stroke due to the energy loaded while compensating for the pressure increase in the positive chamber during the compression stroke. A design is thus required for a spring unit that effectively compensate for the increasing pressure at the end of the compression stroke in a manner not involving an undesirable kick back. It is also advantageous if the spring unit is easy to use and adjust for a user.

### Summary of the invention

The above-mentioned requirements are achieved by the present invention according to the independent claims. Preferred embodiments are set forth in the dependent claims.

For example, one aspect of the invention relates to a spring unit for a shock absorber suitable for a vehicle, wherein the shock absorber comprises a damping cylinder adapted to be telescopically arranged within said spring unit. The spring unit comprises a hollow body comprising at least one compression chamber and at least one additional chamber. The additional chamber is arranged to be in fluid communication with the compression chamber such that at least a first flow of fluid is adapted to be allowed between the compression chamber and the additional chamber. The first flow of fluid is allowed when a threshold value is met.

The spring unit may therefore be adapted to meet a variety of needs for different applications. For example, the means for providing a fluid communication between the chambers may easily be adapted depending on available space, surrounding components and the like. Further, threshold values may be chosen to suite a particular application, both in terms of quantity and desired levels to be met.

The invention is based on the insight that an additional chamber may efficiently reduce the pressure build up at the end of a stroke by allowing a flow of fluid between the compression chamber and the additional chamber. Further, allowing a flow of fluid when a threshold value is met allows for a decrease of the precise determination of the characteristics of the damper. The spring unit may therefore advantageously be used with a shock absorber for a vehicle in order to increase driving comfort, handling of the vehicle and usability for the rider. Additional further developments will be apparent from the following aspects and embodiment of the invention, as well as from the appended claims.

According to a first aspect of the present invention, a spring unit for a shock absorber intended for a vehicle is provided. The shock absorber comprises a damping cylinder, wherein the damping cylinder is adapted to be telescopically arranged within said spring unit. The spring unit comprises a hollow body comprising at least one compression chamber or a return chamber and at least one additional chamber. The additional chamber is arranged to be in fluid communication with the compression chamber or the return chamber such that at least a first flow of fluid is adapted to be allowed between the compression chamber or the return chamber and the additional chamber. The first flow of fluid is allowed when a threshold value is met.

According to one embodiment, the spring unit comprises a first valve, adapted to allow the first flow of fluid from the compression chamber or the return chamber to the additional chamber. The first valve is adapted to allow fluid to pass from the compression chamber or the return chamber to the additional chamber when said threshold value is met. Such a second valve may comprise any suitable valve type, such as for example a disc valve, a ball valve, a valves comprising coil springs or any other type of valve. Further, such a valve may comprise a single port or a plurality of ports. Yet further, the second valve may be adjustable in terms of the threshold value to be met in order for the valve to allow fluid to pass.

In one embodiment, the first flow of fluid from the compression chamber to the additional chamber is allowed during a compression stroke. This design decreases the progressive pressure increase during the compression stroke. In some embodiments the first flow of fluid is allowed only during the compression stroke, in other embodiments a flow may be allowed also during a rebound stroke. Such flows may for example be allowed through the first valve.

In one embodiment, the first flow of fluid from said return chamber to the additional chamber is allowed during a rebound stroke.

In one embodiment, the threshold value is a pressure differential between the compression chamber or said return chamber and the additional chamber. Hereby the pressure drop between the chamber and the additional chamber may be easily defined. Such a pressure differential may be detected be electronic means, or may be detected by mechanical means. Such a pressure differential is further dependent not only on the pressure level prevailing in the chamber, but also on the pressure level of the additional chamber. Accordingly, in some embodiments a predetermined pressure level in the additional chamber may be set in order to tune the properties of the spring unit.

In one embodiment, the threshold value is a pressure level prevailing in said chamber. Such a pressure value may be detected as an absolute value, in other words dependent only on the pressure in the chamber. Such a threshold value may for example allow for a precise setting of the first valve, in embodiments where such a valve is used.

According to one embodiment, the threshold value is adapted to be reached during a compression stroke. Such a design is advantageous for example in that the increasing pressure at the end of the compression stroke may be effectively compensated. Other embodiment may include fluid flows adapted to be allowed between the compression chamber and the additional chamber when a threshold value is reached during a return stroke.

In one embodiment, the chamber has a volume and the threshold value is dependent on a change of volume of said chamber. Such a change of volume may be measured, or detected, using any suitable means. Further, in some embodiments such a change in volume is related to a change in pressure.

In one embodiment, the threshold value is adapted to be dependent on the relative positions between the damping unit and the chamber. The telescopic arrangement of the damping cylinder within the spring unit may in this embodiment for example be a telescopic arrangement within the chamber. In such a case, a relative position between the damping unit and the chamber is related to the overall length of the unit as well as the volume of the chamber. Other possible embodiments include electronic means adapted to detect the relative position of the components of the spring unit. In some embodiment, the relative position of the chamber and any other component of the unit may be used for the threshold value as well.

In one embodiment, the threshold value is dependent on the temperature in the chamber and/or the additional chamber. Possible embodiments include electronically controlled embodiments comprising for example sensor means adapted to detect the temperature in one or more chambers. Alternative embodiment may include mechanical elements adapted to respond to changes in temperature, such as bimetal spring elements or expanding elements.

According to one embodiment, the chamber is delimited at a first end by a sliding seal adapted to be slidably arranged between an outer surface of the damping cylinder and an inner surface of the hollow body and the chamber. In this manner the chamber is delimited in an efficient, preferably fluid tight manner, and is thus formed as a partial volume of the hollow body. Such a sliding seal may for example be a gasket, an O-ring or the like.

According to one embodiment, the chamber is delimited at a second end by a dividing wall. Such a dividing wall may in some embodiments be movable with respect to the hollow body wall, or in other embodiments fixed with respect to the hollow body. Suitable sealing means may be arranged such that the delimitation of the chamber is substantially fluid tight.

According to one embodiment, the additional chamber is arranged adjacently to the chamber, such that the additional chamber is delimited by the dividing wall. Similarly to what has been described above, such an arrangement may comprise a moveable or stationary wall. Further, sealing means may be provided to ensure a fluid tight seal. The adjacent position of the chambers allows for an efficient flow, and reduces for example pressure loss in the system. Further, a compact design may be achieved. Other arrangements of the additional chamber, including for example forming the additional chamber as an external chamber outside of the hollow body are also possible.

According to one embodiment, the dividing wall is arranged at a fixed position with respect to the spring cylinder wall. The position of the wall is thereby easily adapted to the specific case such that a suitable volume may always be achieved for the chamber(s) delimited by the wall. Arranging the dividing wall at a fixed position with respect to the cylinder wall may further be advantageous in that the energy absorbed by the additional chamber may be absorbed more efficiently since the fluid flow through the fixed wall acts like a damper, meaning that the energy is absorbed. Accordingly, the so called "kick-back" is avoided.

According to one embodiment, the additional chamber has a fixed volume. A fixed volume may be an effect of a fixed delimitation of the additional chamber, such as for example a fixed dividing wall. However, embodiments are possible wherein for example a fixed volume additional chamber may be movably arranged in the spring unit, such a movable additional chamber may comprise two movable walls arranged to move at a fixed relative distance from each other. Such a fixed volume may be advantageous in that the energy absorbed by the additional chamber may be absorbed, such that a "kick-back" is avoided.

In one embodiment, the additional chambers comprise at least one internal dividing wall, such that at least two sections are formed in the additional chamber. Such an internal dividing wall enables among others advantages for example a better flow control. Such a dividing wall may further comprise fluid ports and/or valve(s), which may allow for an even higher degree of flow control. The dividing wall may be arranged to divide the additional chamber in two separate compartments, being in fluid communication via for example said ports and/or valves. In some embodiments however, the dividing wall may be arranged to divide the additional chamber only partly, such that a relatively free fluid flow between the at least two sections is allowed.

In one embodiment, the spring unit further comprises a second valve allowing a second flow of fluid from the additional chamber into the compression chamber during a rebound stroke. Such a second valve may comprise any suitable valve type, such as for example a disc valve, a ball valve, a valves comprising coil springs or any other type of valve. Further, such a valve may comprise a single port or a plurality of ports. Yet further, the second valve may be adjustable in terms of the flow resistance provided by the valve. Thus, the second flow of fluid is allowed during a rebound stroke when the chamber is a compression chamber, and preferably, the second flow of fluid is allowed during a compression stroke when the chamber is a return chamber.

According to one embodiment, the second valve is a check valve. When said chamber is a compression chamber, such a check valve is adapted to allow only a flow of fluid in the direction from the additional chamber to the compression chamber and accordingly does not interfere with the flow between the chambers during the compression stroke. At rebound stroke the fluid is allowed through the check valve at a much lower pressure drop such that energy is not absorbed in a noticeable amount. Check valves are well known in the art and may be chosen as suitable for the specific case.

In one embodiment, the first valve is adapted to allow a flow of fluid from the chamber to the additional chamber at a final stage of the compression stroke. Final may in this case refer to the final part in terms of the final geometric part of the stroke, or may be interpreted as the final part of the stroke in terms of the pressure build up.

According to one embodiment, the first and/or the second valve is/are integrated in the dividing wall. Such an integrated design is advantageous for example for assembly purposes, as well as in terms of achieving a compact design. The term integrated may refer to the valves being arranged in for example suitable holes, bores or passages in the dividing wall, further designs wherein the first and/or second valve are integrally formed with the wall are conceivable.

According to one embodiment, the threshold value is manually adjustable. Means for such a manual adjustment may include a knob, a lever or a handle. Such means are preferably arranged external of said hollow body in order to facilitate the adjusting for the user.

According to another embodiment, the threshold value is automatically adjustable. Means for such an automatic adjustment may include sensor means, data processing means and electronic circuitry. However, a mechanical design of an automatic adjustment is also conceivable.

According to one embodiment, the chamber comprises an elastic member. Such an elastic member may for example be utilized to pressurize the spring unit. Examples of such an elastic member include a spring, a coil spring, a resilient member such as an elastomeric element, a resilient bladder and the like.

According to one embodiment, the additional chamber comprises an elastic member. Examples of such an elastic member include a spring, a coil spring, a resilient member such as an elastomeric element, a resilient bladder and the like.

According to one embodiment, the spring unit comprises a return chamber. By return chamber should be understood a chamber wherein a flow of fluid may be received by the return chamber during a compression stroke, in other words, a chamber at least partly accommodating the displaced fluid. Return chambers as such are further well known in the art, and the chamber may be designed accordingly to be adapted to different application.

In one embodiment, the return chamber is arranged in fluid communication with at least the compression chamber such that at least a first flow of fluid is adapted to be allowed between the return chamber and the compression chamber. Such a fluid communication may in some embodiment, wherein the compression and return chamber are arranged at least partly adjacent, be allowed by for example ports, in some embodiment such ports may comprise flow adjusting devices such as valves. In other embodiments, channels, hoses or other fluid passages may be arranged in order to allow a fluid communication.

In one embodiment, the return chamber is arranged in said hollow body. Such an arrangement allows for a compact design and an efficient flow between all chambers of the spring unit. The order of chambers in the hollow body may be any suitable order. In some embodiment the chambers may be adjacent, and/or arranged in line or in a row. In other embodiment, one or more chambers may be arranged telescopically with respect to one another.

In one embodiment, the return chamber comprises an elastic member. Examples of such an elastic member include a spring, a coil spring, a resilient member such as an elastomeric element, a resilient bladder and the like.

According to a second aspect, the present invention relates to a shock absorber intended for a vehicle, the shock absorber comprising a damping unit and a spring unit according to what has been described above. The damping unit comprises a damping fluid cylinder and a piston movably arranged within the damping fluid cylinder, wherein the damping cylinder is adapted to be telescopically arranged within the spring unit. Such a shock absorber may therefore be adapted to meet a variety of needs for different applications and vehicles.

According to one embodiment, the shock absorber comprises a return chamber, adapted to be arranged in fluid communication with at least the compression chamber such that at least a first flow of fluid is adapted to be allowed between the return chamber and the compression chamber. Such a return chamber may be arranged to receive a flow of fluid from the compression chamber during a compression stroke. Return chambers as such are further well known in the art, and the chamber may be designed accordingly to be adapted to different application. Such a fluid communication may be allowed by for example ports; in some embodiment such ports may comprise flow adjusting devices such as valves. In other embodiments, channels, hoses or other fluid passages may be arranged in order to allow a fluid communication. Further, the return chamber may be arranged in the hollow body of the spring unit. Yet further, the return chamber may comprise an elastic member such as a spring, a coil spring, a resilient member such as an elastomeric element, a resilient bladder and the like.

In one embodiment, the damping cylinder is telescopically arranged within the spring unit such that an annular space is formed between an outer surface of the damper cylinder and an inner surface of the hollow body of the spring unit. Such an annular space may in some embodiments constitute at least one of the chambers of the spring unit described in the preceding sections. Such a space may be delimited in a substantially fluid tight manner in order to for example form at least one delimited chamber.

According to one embodiment, the shock absorber further comprises a first sealing structure slidably arranged between an outer surface of the damping fluid cylinder and an inner surface of the hollow body; and a second sliding seal slidably arranged between an outer surface of the damping fluid cylinder and an inner surface of the hollow body, such that the hollow body is divided into a first and a second portion, wherein said first portion is arranged in the annular space and delimited by the first and second seal and the second gas cylinder portion is delimited at least by the second sliding seal. In this manner, a compact and efficient design of the shock absorber is achieved. Further, the telescopic arrangement allows for an interaction between the volumes of the first and second portion and the movement of the telescopically arranged damping cylinder. Suitable seals may include gaskets, o-rings or the like.

In one embodiment, the first seal is carried by the hollow body and arranged in sliding contact with the outside of the damping fluid cylinder. The position for the first seal may be chosen in order to adapt the size of the first portion of the hollow portion.

In one embodiment, the second seal is carried by the damping fluid cylinder and arranged in sliding contact with the inside of the hollow body. Such an arrangement may prove beneficial for assembly purposes. Further, such a seal may facilitate replacement of the seal since the damping fluid cylinder may be removed from the hollow body. As for the case described above, the position of the seal may be chosen to adapt the size of the portion of the hollow cylinder to the application in question.

In one embodiment, the first portion corresponds to the return chamber and the second portion corresponds to said compression chamber. In other words, for such an embodiment the return chamber is arranged in the annular space and delimited by the first and second seal and the compression chamber is delimited at least by the second seal.

In one embodiment, the second portion is further delimited by a dividing wall. In such an embodiment the second portion is formed between on the one hand the second seal and the delimiting wall. Such a dividing wall may in some embodiments be movable with respect to the hollow body wall, or in other embodiments fixed with respect to the hollow body. Suitable sealing means may be arranged such that the delimitation of the compression chamber is substantially fluid tight.

According to one embodiment, the additional chamber is arranged adjacently to the compression chamber, such that the additional chamber is delimited by the dividing wall. Similarly to what has been described above, such an arrangement may comprise a moveable or stationary wall. Further, sealing means may be provided to ensure a fluid tight seal. The adjacent position of the chambers allows for an efficient flow, and reduces for example pressure loss in the system. Further, a compact design may be achieved.

In one embodiment, the additional chamber is further delimited by a first end of the hollow body. In such an embodiment, the additional chamber is arranged at the first end of the hollow body, and may be followed by the compression chamber delimited by the second seal, in turn followed by the return chamber. Hence, a compact, fluid efficient design is achieved.

According to one embodiment, the shock absorber further comprises an external chamber arranged on the outside of the hollow body. The external chamber is arranged to be in fluid communication with at least one of the compression chamber and the return chamber, such that a pressure equalization between the external chamber and the compression chamber and/or the return chamber takes place. Accordingly, the external chamber offers a possibility to regulate the pressure of the compression and/or return chamber by regulating the pressure in the external chamber. The chamber may be arranged directly adjacent to the chamber(s) in question, such that the fluid communication may be achieved via a passage or channel in the hollow body. Other embodiment may include an external chamber arranged at a distance such that fluid lines, or pipes, may be utilized for the fluid communication.

According to one embodiment, the external chamber is arranged on the outside of the gas cylinder, such that the external chamber is in fluid communication with at least one of the first and second portion when the second seal is situated at a predetermined position. Hereby a pressure equalization between the external space and the at least one of the first and second portion takes place. Such an arrangement may be achieved by arranging a passage, or channel, in the hollow body such that a second movable seal may be positioned such that the channel is substantially blocked or such that the passage allows a more or less free flow of fluid to at least one of the portions. Such a seal may further be designed to be able to substantially block the fluid flow, i.e. to be larger than the opening of the channel, or in some embodiments to be somewhat smaller than such an opening such that a limited flow of fluid is allowed also when the seal is positioned in front of the opening.

In one embodiment, the external chamber is exclusively in fluid communication with the first portion when the second seal is positioned at a first predetermined position, such that a pressure equalization between the external space and the first gas cylinder portion takes place. Further, the external chamber is exclusively in fluid communication with the second portion when the second seal is positioned at a second predetermined position, such that a pressure equalization between the external space and the second portion takes place. In this manner, a first pressure equalization may take place between the first portion and the external chamber; this pressure equalization may then be followed by a second pressure equalization between the external chamber and the second portion. In this manner, a substantially equal pressure level may be achieved in all both chambers. Such an arrangement may be achieved by using a channel arranged in the hollow body, from the inner side to the outer side of the body, as described in the previous sections, for the fluid communication to and from the external chamber. The reciprocal, or telescopic motion, of the fluid cylinder with respect to the hollow body will in this case cause the channel through the hollow body to be in fluid communication with either the first portion or the second portion depending on the relative motion and hence the position of the second seal.

In one embodiment, the shock absorber is a gas spring shock absorber. Such a gas spring shock absorber may utilize a gas, such as for example air or any other suitable gas, as the fluid used for the operation of the spring unit.

According to a further aspect, the present invention relates to a front fork for a two wheeled vehicle comprising a shock absorber according to what has been described above. Examples of such two wheeled vehicles includes a motor cycle, an off road motorcycle, a bicycle or a terrain bicycle or mountain bike.

Further objectives of, features of and advantages with the present invention will become apparent when studying the following detailed disclosure, the drawings and the appended claims. Those skilled in the art realize that different features of the present invention can be combined to create embodiments other than those described in the following.

### Short description of the appended drawings

The invention is described in the following illustrative and non-limiting detailed description of exemplary embodiments, with reference to the appended drawings, wherein:
Figure 1 is cross sectional view of a shock absorber comprising a spring unit according to a first aspect of the present invention.
Figure 2 is a cross sectional view of the additional chamber according to one embodiment of the invention.
Figure 3 is a detailed view of the second valve according to one embodiment of the invention.
Figure 4 is a detailed cross sectional view of an embodiment of the shock absorber comprising an external chamber in selectable fluid communication with the compression chamber and the return chamber.
Figure 5 is a diagram showing the damping response curve, according to one embodiment of the invention, in comparison with spring units according to the prior art.
Figure 6 is a diagram showing how different threshold values of the first valve influences the damping response curve.

All figures are schematic, not necessarily to scale, and generally only show parts which are necessary in order to elucidate the invention, wherein other parts may be omitted or merely suggested. Throughout the figures the same reference signs designate the same, or essentially the same features.

### Detailed description of preferred embodiment of the invention

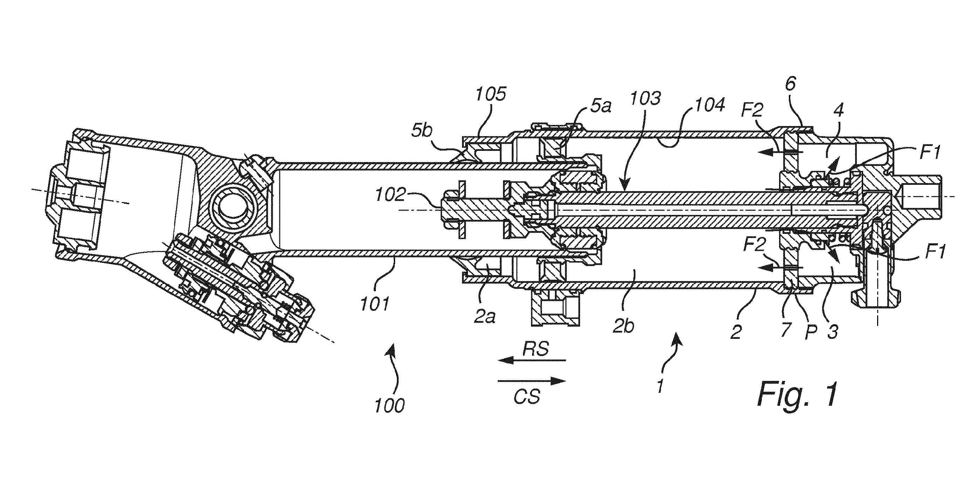

Figure 1 shows a shock absorber 100 comprising a spring unit 1. The shock absorber further comprises a damping cylinder 101. A piston 102 is arranged within the damping cylinder, said cylinder is adapted to be filled with a fluid. A piston rod 103 is adapted to extend through a first end of the damping fluid cylinder and through the spring unit. Further, the damping cylinder is telescopically arranged within the spring unit. Other aspects of the damping fluid cylinder are known in the art and will not be described in greater detail.

The spring unit 1 comprises a hollow body 2, in the illustrated case a spring cylinder 2. The hollow body shown in figure 1 comprises a compression chamber 2b and a return chamber 2a, the latter arranged at a first end of the hollow body 2. Further, an additional chamber 3 is arranged at a second end of the hollow body 2. Accordingly the compression chamber 2b is arranged between the return chamber 2a and the additional chamber 3.

The compression chamber 2b and the additional chamber 3 are arranged in fluid communication such that at least a first flow of fluid F1 from the compression chamber 2b to the additional chamber 3 is allowed. The flow F1 is allowed to flow via a first valve 4. A second flow of fluid F2 is allowed to flow from the additional chamber 3 to the compression chamber 2b via a second valve 7. In the illustrated case, the additional chamber is arranged in fluid communication with the compression chamber 2b, however, in other embodiments (not shown), the additional chamber may instead be arranged to be in fluid communication with the return chamber 2a, or the spring unit may have a first additional chamber in fluid communication with the compression chamber 2b and a second additional chamber in fluid communication with the return chamber 2a.

The compression chamber 2b is delimited at a first end by a sliding seal 5a, the seal is arranged to slide between the inner wall 104 of the hollow body 2 and the outer surface 105 of the damping cylinder 101. At a second end, the compression chamber 2b is delimited by a dividing wall 6. Due to the arrangement of the additional chamber 3 adjacent to the compression chamber 2b, the additional chamber 3 is also delimited by the wall 6.

In the illustrated embodiment, the wall 6 is arranged at a fixed position P with respect to the wall of the spring cylinder unit 2. This arrangement is designed such that a fluid tight seal is achieved by the dividing wall 6. Since the additional chamber 3 is delimited at the other end of the end wall of the hollow body, the illustrated additional chamber 3 has a fixed volume.

The return chamber 2a is delimited on the one hand of the sliding seal 5a, and on the other side of a second seal 5b sealing the compression chamber 2b from the surroundings. Accordingly, in the illustrated case, the return chamber 2b is formed by the annular space between the hollow body 2, or spring cylinder, and the fluid cylinder.

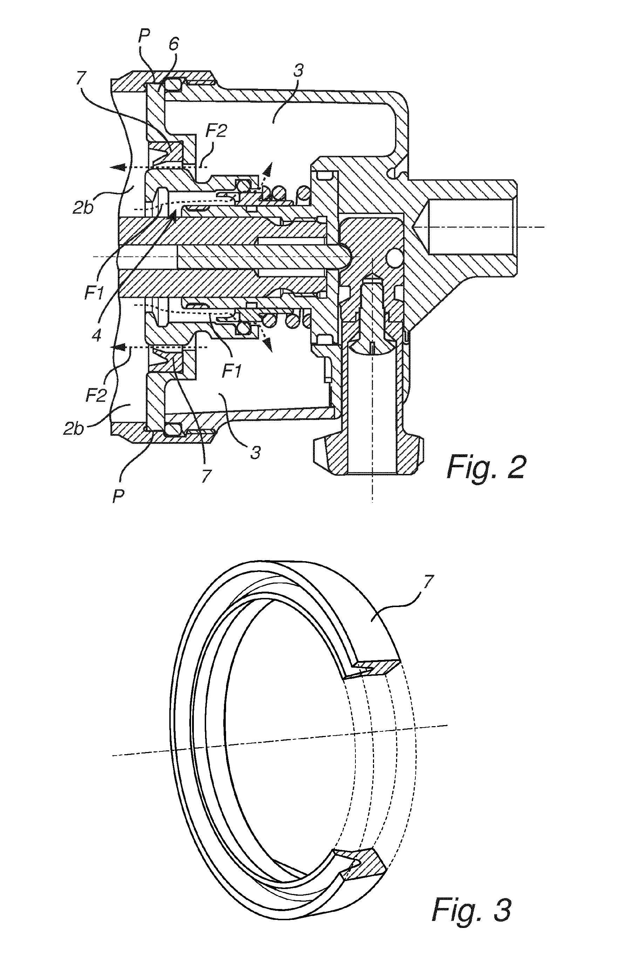

The dividing wall 6, the valves 4, 7 and the fluid flows F1 and F2 will now be described in greater detail with reference to Figure 2. Figure 2, shows a detailed view of the additional chamber 3 delimited by the diving wall 6 and an end face of the spring unit cylinder 2. Both valves 4, 7 are integrated in the dividing wall 6.

The first valve 4 is adapted to allow the first flow of fluid F1, illustrated by the solid arrow, to flow from the compression chamber 2b to the additional chamber. This valve, in the illustrated case, is adapted to allow the flow F1 to flow during a compression stroke CS. The first valve 4 is further designed such that this first flow F1 is allowed when a threshold value THV is met. In the illustrated case, the threshold value is a predetermined pressure differential. Valves adapted to open at a predetermined threshold value as such are known in the art and the first valve 4 will therefore not be described in greater detail.

In the illustrated case, the wall 6 is arranged at a fixed point P on the hollow body wall. The compression chamber 2b is delimited by the wall, and by the second seal 5b and the end face of the damping fluid cylinder. Consequently, the pressure in the compression chamber 2b is dependent on the relative position between the damping unit and the hollow body 2, the damping unit 101 telescoping within the hollow body. Accordingly, the pressure level in the compression chamber 2b will rise during a compression stroke when the damping unit and the spring unit move towards one another. The first valve 4 is adapted to open when the threshold level, i.e. the pressure differential over the dividing wall 6, is sufficiently large. In other words, the first valve is adapted to open during a final stage of the compression stroke. Hereby, the additional chamber 3 gets connected to the compression chamber 2b at a predetermined pressure and the progressive pressure increase at the end of the stroke is thereby decreased. As a further consequence, the pressure drop between the compression chamber 2b and the additional chamber 3 is defined and adjustable, and when the valve opens the fluid flow from the compression chamber 2b to the additional chamber 3 acts like a damper, in the sense that the energy is absorbed and no "kick back" will occur.

The second valve 7 is adapted to allow the second flow of fluid, illustrated by the dotted arrow, from the additional chamber 3 to the compression chamber 2b. The illustrated valve 7 is a check valve allowing only a flow F2 in this direction and Figure 3 shows a detailed view of a check valve according to one embodiment. The flow F2 will occur due to the resulting pressure levels during the return stroke. Further, this flow comprises a much lower pressure drop that is not meant to absorb energy in a noticeable amount.

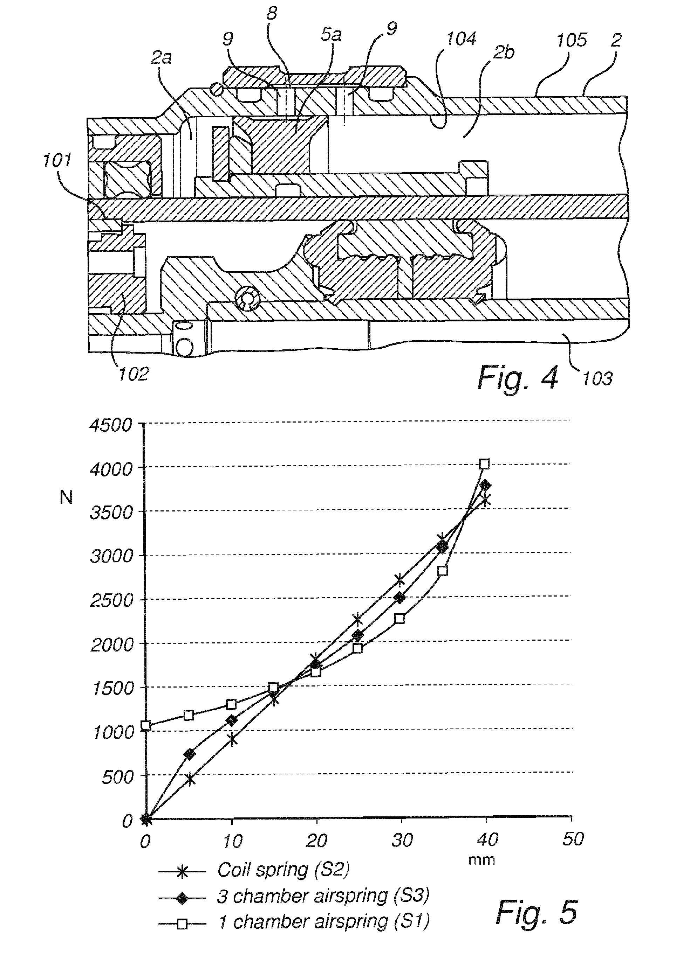

Figure 4 shows a detailed view of an embodiment comprising an external chamber 8. The external chamber is arranged on the outside of the cylinder 2 and is in the illustrated embodiment in fluid connection with the compression chamber 2b or the return chamber 2a, depending on the position of the sealing 5a. This fluid connection is achieved via at least one passage 9, or channel 9. The fluid passage 9 extends through the wall of the spring cylinder 2 and connects the external chamber 8 to the compression chamber or to the return chamber 2a depending on the telescoping movement between the damping cylinder 101 and the spring unit cylinder 2, in other words the positioning of the sealing 5a. In the present case two passages are arranged to extend through the wall of the spring cylinder. The reciprocal, or telescopic motion, of the fluid cylinder with respect to the hollow body will in the illustrated case cause one of the channels 9 (and therefore the chamber 8) through the hollow body wall to be in fluid communication exclusively with the first portion or the second portion depending on the relative motion and hence the position of the second seal. Hereby, a pressure equalization between the external chamber 8 and the chamber 2a, 2b presently in fluid connection with the external chamber takes place.

Figure 5 shows a diagram of the damper response, which shows the damping characteristics of the spring unit according to one embodiment, in comparison with two spring units according to the prior art. The diagram schematically shows the difference between a conventional air spring S1 having only one compression chamber, a coil spring S2 and the air spring comprising two compression chambers S3, i.e. one compression chamber 2b and one additional chamber 3, according to the present invention. As seen in the figure, compared to the air spring S1, the progressive pressure increase at the end of the compression stroke is decreased.

The pressure difference between the compression chamber 2b and the additional chamber 3 is controlled by the first valve 4. Thus, the pressure drop over the first valve 4 controls at which moment during the stroke the first valve 4 opens and lets damping fluid into the additional chamber 3.

At the starting point, the compression chamber 2b and the additional chamber 3 has essentially the same pressure. One advantage with the present invention is that when filling the damper, in order to achieve a desired pressure in the chambers, it is only necessary to fill the spring unit at one single point, i.e. in the additional chamber 3. Since the additional chamber 3 and the compression chamber 2b are interconnected via said second valve 7, which is a so called check valve, the damping medium will also enter the compression chamber 2b, via the second valve, such that the additional chamber 3 and the compression chamber 2b gets essentially the same pressure initially.

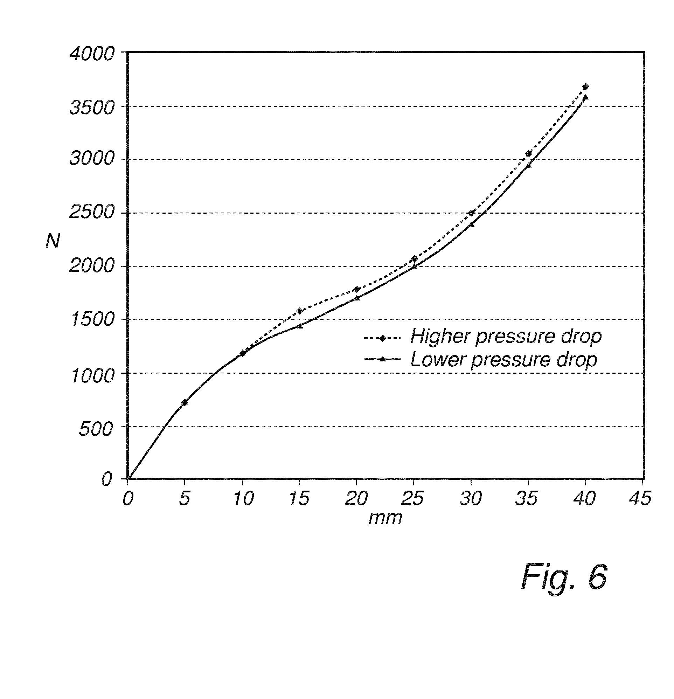

Depending on the size of the additional chamber 3, the size of the compression chamber 2b, and the pressure drop over the first valve 4, i.e. at which pressure difference between the chambers 2b, 3 the valve 4 opens, it is possible to decide how the damping response curve will look. Figure 6 illustrates how the pressure drop over the first valve 4 influences the damping characteristics of the spring unit. Preferably, the pressure differential between the compression chamber 2b and the additional chamber 3 is approximately between 30-70% at the moment when the first valve 4 opens. In other words, during the compression stroke, the pressure is approximately 30-70% higher in the compression chamber 2b with respect to the additional chamber 3 at the moment the first valve 4 opens. Thus, the threshold value THV may preferably be set to be a pressure differential, between the additional chamber and the compression chamber, between 1:1,3 and 1:1,7. As an example, if chambers 2d, 4 are initially pressurized to 10 Bar, the first valve 4 may be arranged to open when the pressure is raised to 14 Bar in the compression chamber during the compression stroke (cf. lower pressure drop curve in Figure 6). Furthermore, if the first valve 4 is set to open at a higher pressure, e.g. about 16 Bar, the damping response curve will look more like the higher pressure drop curve. Naturally, the valve 4 may be set to open at any other threshold value, i.e. at a higher or lower pressure differential, i.e. the between 1:1,2 and 1:1,8, or even higher depending on how a desired damping response curve looks.

While specific embodiments have been described, the skilled person will understand that various modifications and alterations are conceivable within the scope as defined in the appended claims.

### Itemised list

Item 1. Spring unit (1) for a shock absorber (100) suitable for a vehicle, said shock absorber comprising a damping cylinder (101), wherein said damping cylinder is adapted to be telescopically arranged within said spring unit, said spring unit comprising:
   a hollow body (2) comprising at least one compression chamber (2b) or at least one return chamber (2a);
   at least one additional chamber (3), said additional chamber being arranged to be in fluid communication with said compression chamber or return chamber such that at least a first flow of fluid (F1) is adapted to be allowed between said compression chamber or return chamber and said additional chamber;
   wherein said first flow of fluid is allowed when a threshold value (THV) is met.
Item 2. Spring unit according to item 1, wherein said spring unit comprises a first valve (4), adapted to allow said first flow of fluid from said compression chamber or said return chamber to said additional chamber, said first valve being adapted to allow fluid to pass from said compression chamber or said return chamber to said additional chamber when said threshold value is met.
Item 3. Spring unit according to any of items 1-2, wherein said first flow of fluid from said compression chamber to the additional chamber is allowed during a compression stroke.
Item 4. Spring unit according to any of items 1-2, wherein said first flow of fluid from said return chamber to the additional chamber is allowed during a rebound stroke.
Item 5. Spring unit according to any of items 1-4, wherein said threshold value is a pressure differential between said chamber (2a, 2b) and said additional chamber.
Item 6. Spring unit according to any of items 1-5, wherein said threshold value is a pressure level prevailing in said chamber (2a, 2b).
Item 7. Spring unit according to any of items 1-6, wherein said threshold value is adapted to be reached during a compression stroke when said chamber is a compression chamber (2b), and wherein said threshold value is adapted to be reached during a return stroke when said chamber is a return chamber (2a).
Item 8. Spring unit according to any of items 1-7, wherein said chamber (2a, 2b) has a volume and said threshold value is dependent on a change of volume of said chamber (2a, 2b).
Item 9. Spring unit according to any of items 1-8, wherein said threshold value is adapted to be dependent on the relative positions between said damping unit and said chamber (2a, 2b).
Item 10. Spring unit according to any of items 1-9, wherein said threshold value is dependent on the temperature in said chamber (2a, 2b) and/or said additional chamber.
Item 11. Spring unit according to any of the preceding items, wherein said chamber (2a, 2b) at a first end is delimited by a sliding seal (5a) adapted to be slidably arranged between an outer surface of said damping cylinder and an inner surface of said hollow body and said chamber (2a, 2b).
Item 12. Spring unit according to any of the preceding items, wherein said chamber (2a, 2b) at a second end is delimited by a dividing wall (6).
Item 13. Spring unit according to item 12, wherein said additional chamber is arranged adjacently to said chamber (2a, 2b), such that said additional chamber is delimited by said dividing wall.
Item 14. Spring unit according to item 12 or 13, wherein said dividing wall is arranged at a fixed position with respect to said spring cylinder wall.
Item 15. Spring unit according to any of the preceding items, wherein said additional chamber has a fixed volume.
Item 16. Spring unit according to any of the preceding items, wherein said additional chambers comprises at least one internal dividing wall, such that at least two sections are formed in the additional chamber.
Item 17. Spring unit according to any of the preceding items, further comprising a second valve (7) allowing a second flow of fluid from said additional chamber into the chamber (2a, 2b).
Item 18. Spring unit according to item 17, wherein said second flow of fluid is allowed during a rebound stroke or a compression stroke.
Item 19. Spring unit according to any of items 17-18, wherein said second valve is a check valve.
Item 20. Spring unit according to any of the preceding items, wherein said first valve is adapted to allow a flow of fluid from said chamber (2a, 2b) to said additional chamber at a final stage of said stroke.
Item 21. Spring unit according to any of the preceding items when dependent on any of items 17-18, wherein said first and/or said second valve is/are integrated in said dividing wall.
Item 22. Spring unit according to any of the preceding items, wherein said threshold value is manually adjustable.
Item 23. Spring unit according to any of the preceding items, wherein said threshold value is automatically adjustable.
Item 24. Spring unit according to any of the preceding items, wherein said chamber (2a, 2b) comprises an elastic member.
Item 25. Spring unit according to any of the preceding items, wherein said additional chamber comprises an elastic member.
Item 26. Spring unit according to any of the preceding items, wherein said spring unit comprises a return chamber (2a).
Item 27. Spring unit according to item 26, wherein said return chamber is arranged in fluid communication with at least said compression chamber such that at least a first flow of fluid is adapted to be allowed between said return chamber and said compression chamber.
Item 28. Spring unit according to item 26 or 27 wherein said return chamber is arranged in said hollow body.
Item 29. Spring unit according to any of the preceding items 26-28, wherein said return chamber comprises an elastic member.
Item 30. Shock absorber (100) intended for a vehicle, said shock absorber comprising:
   a damping unit and a spring unit according to any of items 1-29 , said damping unit comprising, a damping fluid cylinder (101) and a piston (102) movably arranged within said damping fluid cylinder, wherein said damping cylinder is adapted to be telescopically arranged within said spring unit.
Item 31. Shock absorber according to item 30, said shock absorber comprising a return chamber, adapted to be arranged in fluid communication with at least said compression chamber such that at least a first flow of fluid is adapted to be allowed between said return chamber and said compression chamber.
Item 32. Shock absorber according to item 30 or 31, wherein said damping cylinder is telescopically arranged within said spring unit such that an annular space is formed between an outer surface of the damper cylinder and an inner surface of the hollow body of the spring unit.
Item 33. Shock absorber according to item 32, said shock absorber further comprising:
   a first sealing structure (5b) slidably arranged between an outer surface (105) of said damping cylinder and an inner surface (104) of said hollow body; and
   a second sliding seal (5a) slidably arranged between an outer surface of said damping fluid cylinder and an inner surface of said hollow body, such that said hollow body is divided into a first and a second portion, wherein said first portion is arranged in said annular space and delimited by said first and second seal and said second portion is delimited at least by said second sliding seal.
Item 34. Shock absorber according to item 33, wherein said first seal is carried by the hollow body and arranged in sliding contact with the outside of the fluid cylinder.
Item 35. Shock absorber according to item 33 or 34, wherein said second seal is carried by the damping fluid cylinder and arranged in sliding contact with the inside of the hollow body.
Item 36. Shock absorber according to any of item 33-35, wherein said first portion corresponds to said return chamber and said portion corresponds to said compression chamber.
Item 37. Shock absorber according to any of items 33-36, wherein said second portion is further delimited by a dividing wall.
Item 38. Shock absorber according to item 37, wherein said additional chamber is arranged adjacently to said compression chamber, such that said additional chamber is delimited by said dividing wall.
Item 39. Shock absorber according to any of the preceding items 30-38, wherein said additional chamber is further delimited by a first end of said hollow body.
Item 40. Shock absorber according to any of the preceding items 30-39, further comprising an external chamber (8) arranged on the outside of said gas cylinder, said external chamber arranged to be in fluid communication with at least one of said compression chamber and said return chamber, such that a pressure equalization between the external space and said compression chamber and/or said return chamber takes place.
Item 41. Shock absorber according to item 40, wherein said external chamber is arranged on the outside of said gas cylinder, such that said external chamber is in fluid communication with at least one of said first and second portions when the second seal is situated at a predetermined position, such that a pressure equalization between the external space and the at least one first or second portion takes place.
Item 42. Shock absorber according to item 40 or 41, wherein said external chamber is exclusively in fluid communication with said first portion when said second seal is positioned at a first predetermined position, such that a pressure equalization between the external space and the first portion takes place, and exclusively in fluid communication with said second portion when the second seal is positioned at a second predetermined position, such that a pressure equalization between the external chamber and the second portion takes place.
Item 43. Shock absorber according to any of the preceding items 30-42, wherein said shock absorber is a gas spring shock absorber.
Item 44. Front fork for a two wheeled vehicle comprising a shock absorber according to any of the preceding items 30-42.

## Claims

1. Spring unit (1) for a shock absorber (100) suitable for a vehicle, said shock absorber comprising a damping cylinder (101), wherein said damping cylinder is adapted to be telescopically arranged within said spring unit, said spring unit comprising:
a hollow body (2) comprising at least one compression chamber (2b) or at least one return chamber (2a);
at least one additional chamber (3), said additional chamber being arranged to be in fluid communication with said compression chamber or return chamber such that at least a first flow of fluid (F1) is adapted to be allowed between said compression chamber or return chamber and said additional chamber;
wherein said first flow of fluid is allowed when a threshold value (THV) is met.

2. Spring unit according to claim 1, wherein said spring unit comprises a first valve (4), adapted to allow said first flow of fluid from said compression chamber or said return chamber to said additional chamber, said first valve being adapted to allow fluid to pass from said compression chamber or said return chamber to said additional chamber when said threshold value is met.

3. Spring unit according to any of claims 1-2, wherein said first flow of fluid from said compression chamber to the additional chamber is allowed during a compression stroke, or wherein said first flow of fluid from said return chamber to the additional chamber is allowed during a rebound stroke.

4. Spring unit according to any of claims 1-3, wherein said threshold value is a pressure differential between said chamber (2a, 2b) and said additional chamber.

5. Spring unit according to any of claims 1-4, wherein said threshold value is a pressure level prevailing in said chamber (2a, 2b).

6. Spring unit according to any of claims 1-5, wherein said threshold value is adapted to be dependent on the relative positions between said damping unit and said chamber (2a, 2b).

7. Spring unit according to any of the preceding claims, wherein said chamber (2a, 2b) at a first end is delimited by a sliding seal (5a) adapted to be slidably arranged between an outer surface of said damping cylinder and an inner surface of said hollow body and said chamber (2a, 2b).

8. Spring unit according to any of the preceding claims, wherein said chamber (2a, 2b) at a second end is delimited by a dividing wall (6).

9. Spring unit according to claim 8, wherein said additional chamber is arranged adjacently to said chamber (2a, 2b), such that said additional chamber is delimited by said dividing wall.

10. Spring unit according to claim 8 or 9, wherein said dividing wall is arranged at a fixed position with respect to said spring cylinder wall.

11. Spring unit according to any of the preceding claims, further comprising a second valve (7) allowing a second flow of fluid from said additional chamber into the chamber (2a, 2b), wherein said second valve is a check valve.

12. Spring unit according to any of the preceding claims when dependent on claim 11, wherein said first and/or said second valve is/are integrated in said dividing wall.

13. Spring unit according to any of the preceding claims, wherein said spring unit comprises a return chamber (2a).

14. Spring unit according to claim 13, wherein said return chamber is arranged in fluid communication with at least said compression chamber such that at least a first flow of fluid is adapted to be allowed between said return chamber and said compression chamber.

15. Shock absorber (100) intended for a vehicle, said shock absorber comprising:
a damping unit and a spring unit according to any of claims 1-14 , said damping unit comprising, a damping fluid cylinder (101) and a piston (102) movably arranged within said damping fluid cylinder, wherein said damping cylinder is adapted to be telescopically arranged within said spring unit.

16. Shock absorber according to claim 15, said shock absorber comprising a return chamber, adapted to be arranged in fluid communication with at least said compression chamber such that at least a first flow of fluid is adapted to be allowed between said return chamber and said compression chamber.

17. Shock absorber according to claim 15 or 16, wherein said damping cylinder is telescopically arranged within said spring unit such that an annular space is formed between an outer surface of the damper cylinder and an inner surface of the hollow body of the spring unit.

18. Shock absorber according to claim 17, said shock absorber further comprising:
a first sealing structure (5b) slidably arranged between an outer surface (105) of said damping cylinder and an inner surface (104) of said hollow body; and
a second sliding seal (5a) slidably arranged between an outer surface of said damping fluid cylinder and an inner surface of said hollow body, such that said hollow body is divided into a first and a second portion, wherein said first portion is arranged in said annular space and delimited by said first and second seal and said second portion is delimited at least by said second sliding seal.

19. Shock absorber according to claim 18, wherein said first seal is carried by the hollow body and arranged in sliding contact with the outside of the fluid cylinder.

20. Shock absorber according to claim 18 or 19, wherein said second seal is carried by the damping fluid cylinder and arranged in sliding contact with the inside of the hollow body.

21. Shock absorber according to any of claim 15-20, wherein said first portion corresponds to said return chamber and said second portion corresponds to said compression chamber.

22. Shock absorber according to any of the preceding claims 15-21, further comprising an external chamber (8) arranged on the outside of said gas cylinder, said external chamber arranged to be in fluid communication with at least one of said compression chamber and said return chamber, such that a pressure equalization between the external space and said compression chamber and/or said return chamber takes place.

23. Shock absorber according to claim 22, wherein said external chamber is arranged on the outside of said gas cylinder, such that said external chamber is in fluid communication with at least one of said first and second portions when the second seal is situated at a predetermined position, such that a pressure equalization between the external space and the at least one first or second portion takes place.

24. Shock absorber according to claim 22 or 23, wherein said external chamber is exclusively in fluid communication with said first portion when said second seal is positioned at a first predetermined position, such that a pressure equalization between the external space and the first portion takes place, and exclusively in fluid communication with said second portion when the second seal is positioned at a second predetermined position, such that a pressure equalization between the external chamber and the second portion takes place.

25. Front fork for a two wheeled vehicle comprising a shock absorber according to any of the preceding claims 15-24.
